# EUROPÄISCHE PATENTANMELDUNG

(11) **EP 1 716 743 A1**
(43) Veröffentlichungstag der Anmeldung: **02.11.2006**
(21) Anmeldenummer: 06112966.4
(22) Anmeldetag: 24.04.2006
(51) Int. Cl.: A01D 89/00

(54) **Zinkenträgergehäuse, Zinkenträger und Aufnehmer für landwirtschaftliches Erntegut**

(30) Priorität: 29.04.2005 DE 102005020464
(71) Anmelder: Deere & Company, Moline, IL 61265-8098 (US)
(72) Erfinder: Josset, Etienne, 70100, Arc les Gray (FR); Pourchet, Jérémy, 25650, Gilley (FR)
(74) Vertreter: Löser, Iris

(57) **Zusammenfassung**

Die Erfindung bezieht sich auf ein Zinkenträgergehäuse (12) eines Aufnehmers für landwirtschaftliches Erntegut geeignet zur Aufnahme von Zinken (16) sowie einen ein solchen Zinkenträgergehäuse (12) aufweisenden Zinkenträger (10) und einen Aufnehmer mit wenigstens einem derartigen Zinkenträger (10).

Es wird vorgeschlagen, dass das Gehäuse (12) eine Gehäuseabdeckung (14) mit Aussparungen (28) aufweist, die geeignet sind, es zumindest Endabschnitten (26) der Zinken (16) zu erlauben, sich aus dem Gehäuse (12) nach außen zu erstrecken.

## Beschreibung

Die Erfindung betrifft ein Zinkenträgergehäuse eines Aufnehmers für landwirtschaftliches Erntegut geeignet zur Aufnahme von Zinken sowie einen ein solches Zinkenträgergehäuse aufweisenden Zinkenträger und einen Aufnehmer mit wenigstens einem derartigen Zinkenträger.

Aufnehmer für landwirtschaftliches Erntegut werden beispielsweise an Ballenpressen, Ladewagen, Schwadern und Feldhäckslern eingesetzt, um auf dem Boden liegendes Gut aufzunehmen. Sie umfassen ein trommelartiges Gehäuse mit Schlitzen, durch die sich gesteuerte oder feste Zinken zum Erfassen des Guts erstrecken. Diese Zinken wiederum sind in Zinkenträgergehäusen angeordnet, welche starken Belastungen ausgesetzt sind. Durch diese Belastungen kann es zu Verformungen, welche einen vorzeitigen Austausch der Zinkenträgergehäuse notwendig machen können, kommen.

Das der Erfindung zugrunde liegende Problem wird darin gesehen, ein verbessertes Zinkenträgergehäuse bzw. einen Zinkenträger mit einem solchen Gehäuse bzw. einen Aufnehmer mit einem derartigen Zinkenträger bereitzustellen, das die genannten Nachteile nicht aufweist.

Dieses Problem wird erfindungsgemäß durch die Lehre der Patentansprüche 1, 7 bzw. 10 gelöst, wobei in den weiteren Patentansprüchen Merkmale aufgeführt sind, die die Lösung in vorteilhafter Weise weiterentwickeln.

Es wird ein Zinkenträgergehäuse eines Aufnehmers für landwirtschaftliches Erntegut geeignet zur Aufnahme von Zinken vorgeschlagen. Das Gehäuse weist eine Gehäuseabdeckung mit Aussparungen auf, die geeignet sind, es zumindest Endabschnitten der Zinken zu erlauben, sich aus dem Gehäuse nach außen zu erstrecken. Die Gehäuseabdeckung verstärkt das Zinkenträgergehäuse derart, dass dieses insbesondere Torsionssowie Biegebelastungen verbessert widerstehen kann. Trotz dieser Verstärkung kommt es zu keiner Behinderung der Zinken bzw. deren Beweglichkeit. Darüber hinaus sind die Zinken je Ausbildung der Aussparungen zu Wartungszwecken oder zum Austausch bzw. Aus- und Einbau zugänglich.

Das Gehäuse und die Gehäuseabdeckung können einteilig, beispielsweise in der Art eines Rohres oder allgemein in der Art eines zumindest im Wesentlichen geschlossenen Hohlprofils ausgebildet sein. Die Aussparungen können in dieses Rohr bzw. das Hohlprofil beispielsweise mittels eines Laserschneidverfahrens eingebracht werden. Das Gehäuse und die Gehäuseabdeckung können aber auch als getrennten Bauteile ausgebildet sein, welche fest, beispielsweise durch verschweißen, oder auch lösbar miteinander verbunden sein können.

Die Gehäuseabdeckung kann sich beispielsweise über die gesamte Erstreckung des Zinkenträgergehäuses erstrecken. Dies ist insbesondere vorteilhaft, wenn diese Erstreckung gering ist, so dass die Gehäuseabdeckung dem Zinkenträgergehäuse kein wesentliches Gewicht hinzufügt. Insbesondere bei Zinkenträgergehäusen größerer Erstreckung kann es aber vorteilhaft sein, wenn die Gehäuseabdeckung das Zinkenträgergehäuse nur abschnittsweise überdeckt. Beispielsweise ist es denkbar, dass eine derartige Zinkenträgergehäuseabdeckung in Endbereichen des Zinkenträgergehäuses, welche beispielsweise erhöhten Belastungen ausgesetzt sind, angeordnet sind. Es kann abhängig von den auftretenden Belastungen auch vorteilhaft sein, eine derartige Gehäuseabdeckung nur in einem Endbereich vorzusehen. Beispielsweise kann die Gehäuseabdeckung dann derart dimensioniert werden, dass sie sich beispielsweise beginnend in dem einen Endbereich über circa 2/3 der Erstreckung des Zinkengehäuses erstreckt. Es ist aber auch eine größere oder geringere Erstreckung denkbar.

Die Gehäuseabdeckung kann einteilig ausgebildet sein. Ist sie mehrteilig ausgebildet, so kann sie beispielsweise in Bereichen, beispielsweise den Endbereichen, des Zinkenträgergehäuses vorgesehen werden, in denen die größten Belastungen auftreten.

Eine einfache Montage der Gehäuseabdeckung ist möglich, wenn das Zinkenträgergehäuse im Wesentlichen und/oder annährend U-förmig ausgebildet ist. Eine derartige Ausbildung ist darüber hinaus kostengünstig.

Schließen jeweils zwei Aussparungen zwischen sich einen Steg und/oder ist die Gehäuseabdeckung leiterartig ausgebildet, so ergibt sich eine besonders effektive Verstärkung. Darüber hinaus ist eine derartige Gehäuseabdeckung einfach in der Herstellung.

Ein Zinkenträger eines Aufnehmers für landwirtschaftliches Erntegut kann einen oder eine Mehrzahl von Zinken aufweisen, welche direkt oder indirekt an dem Zinkenträgergehäuse befestigt sind und die vorzugsweise jeweils wenigstens einen Endabschnitt aufweisen, der sich durch eine der Aussparungen in der Gehäuseabdeckung nach außen erstreckt.

Weisen die Zinken einen spiralförmigen Abschnitt auf, der vorzugsweise zumindest im Wesentlichen im Inneren des Gehäuses angeordnet ist, von dem sich der Endabschnitt bzw. vorzugsweise zwei Endabschnitte nach außen erstrecken, so kann sich der Zinken verformen, wodurch das erzielbare Förderverhalten verbessert wird.

Um Belastungen weiter entgegenzuwirken, kann das Gehäuse zumindest in einem oder beiden seiner Endbereiche eine rückwärtige Verstärkung aufweisen.

Ein Aufnehmer für landwirtschaftliches Erntegut kann einen oder mehrere derartige Zinkenträger aufweisen. Bei einem derartigen Aufnehmer handelt es sich insbesondere um eine so genannte Pick-Up, wie sie beispielsweise an landwirtschaftlichen Erntemaschinen, wie Feldhäckslern, Mähdreschern oder Ballenpressen zum Einsatz kommt.

In der Zeichnung ist ein nachfolgend näher beschriebenes Ausführungsbeispiel der Erfindung dargestellt. Es zeigt:
- Fig. 1: eine perspektivische Ansicht eines Zinkenträgers eines landwirtschaftlichen Aufnehmers,
- Fig. 2: eine vergrößerte Darstellung eines rechtseitigen Endbereichs des Zinkenträgers, mit im Inneren eines Gehäuses des Zinkenträgers angeordneten Zinken und einer Gehäuseabdeckung und
- Fig. 3: eine vergrößerte Darstellung eines linkseitigen Endbereichs des Zinkenträgergehäuse von unten betrachtet.

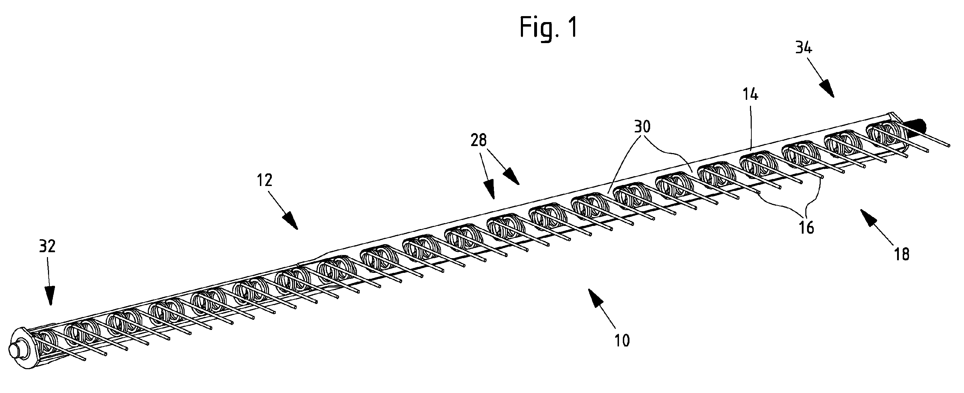

In der Figur 1 ist eine perspektivische Ansicht eines Zinkenträgers 10 eines Aufnehmers für Erntegut, einer so genannten Pick-Up, dargestellt, der an Ballenpressen, Ladewagen, Schwadern oder Feldhäckslern verwendbar ist. Ein derartiger Aufnehmer ist beispielsweise aus der DE-A-102 15 034, welche hiermit in die vorliegende Anmeldung einbezogen wird, bekannt und weist mehrere, beispielsweise vier Zinkenträger 10 auf.

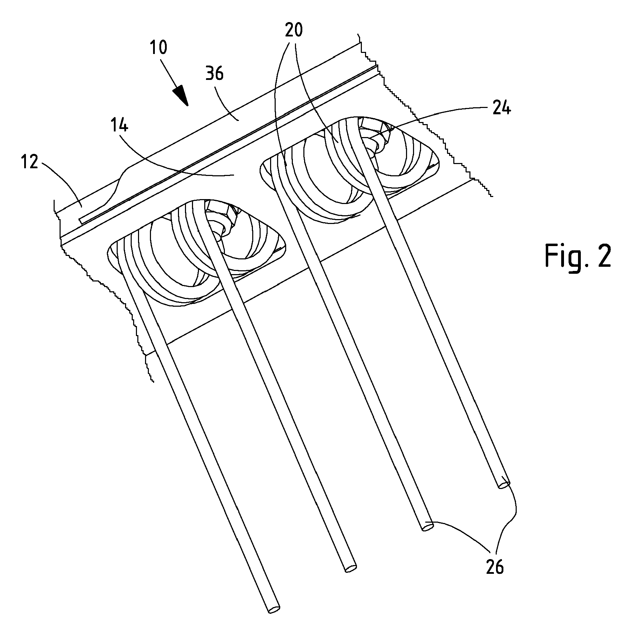

Es wird nun auch auf Figur 2 Bezug genommen, aus der ersehen werden kann, dass der Zinkenträger 10 ein Gehäuse 12, eine Gehäuseabdeckung 14 sowie eine Mehrzahl von Zinken 16 aufweist. Das Gehäuse 12 weist eine offene Vorderseite 18 auf und ist ansonsten zumindest im Wesentlichen geschlossen ausgebildet.

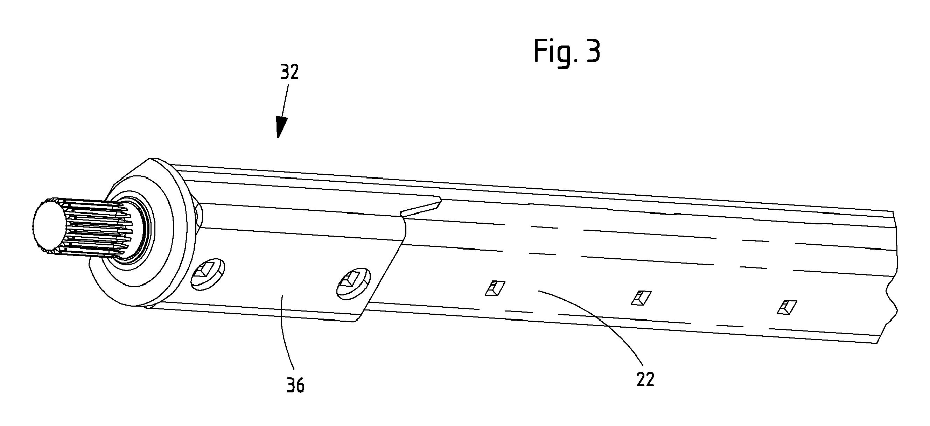

Die Zinken 16 sind aus federndem Material hergestellt und umfassen einen spiralförmigen Abschnitt 20, der im Inneren des Gehäuses 12 aufgenommen wird und der mit einer Rückwand 22 (siehe Figur 3) des Gehäuse 12 gemäß dem vorliegenden Ausführungsbeispiel über Schraubverbindungen 24 verbunden ist und sich nach außen erstreckende Endabschnitte 26. Allgemein sind die Zinken 22 eingerichtet, Erntegut aufzunehmen und nach oben hinten zu fördern, wenn der Aufnehmer über ein Feld bewegt wird, auf dem das Erntegut in der Regel in einem Schwad liegt.

Die Gehäuseabdeckung 14 ist an der offenen Vorderseite 18 des Gehäuses 12 vorgesehen. Gemäß dem vorliegenden Ausführungsbeispiel ist die Gehäuseabdeckung 14 mit dem Gehäuse 12 fest, beispielsweise durch Verschweißen, verbunden. Es ist aber auch denkbar, dass die Gehäuseabdeckung 14 lösbar, beispielsweise verschraubt an dem Gehäuse 12 vorgesehen ist. Darüber hinaus ist es auch denkbar, das Gehäuse 12 und die Gehäuseabdeckung 14 einteilig, beispielsweise in der Art eines Rohres oder allgemein eines geschlossenen Profils auszubilden.

Die Gehäuseabdeckung 14 weist entsprechend der Anzahl der vorgesehenen Zinken 16 Aussparungen 28 auf, die derart ausgebildet sind, dass sich die Endabschnitte 26 aus dem Inneren des Gehäuses 12 nach außen erstrecken können. Darüber hinaus sind die Aussparungen 28 vorzugsweise derart dimensioniert, dass die Zinken 16 in das Innere des Gehäuses 12 eingebracht bzw. aus diesem entfernt und die Schraubverbindung 24 angezogen bzw. gelöst werden kann, um eine Austausch der Zinken 16 zu erleichtern. Insbesondere, wenn die Gehäuseabdeckung 14 an dem Gehäuse 12 lösbar vorgesehen ist, können die Aussparungen 28 auch derart dimensioniert werden, dass die Zinken 16 nicht durch die Aussparungen 28 hindurchgelangen können. Zum Austausch der Zinken 16 kann in diesem Falle die Gehäuseabdeckung 14 von dem Gehäuse 12 gelöst werden. Die Aussparungen 28 sind erfindungsgemäß derart ausgebildet, dass die Gehäuseabdeckung 14 zwischen den Zinken 16 Stege 30 bildet. Die Aussparungen können beispielsweise mittels Ausstanzen, Schneiden, Laser-Schneiden oder jeden anderen geeigneten Verfahrens in die Gehäuseabdeckung 14 eingebracht werden.

Die Gehäuseabdeckung 14 kann sich erfindungsgemäß über das gesamte Gehäuse 12 erstrecken. Es kann aber auch vorgesehen sein, dass die Gehäuseabdeckung 14 das Gehäuse 12 nur abschnittsweise überdeckt. Der Zinkenträger 10 und somit das Zinkenträgergehäuse 12 weisen jeweilige Endbereiche 32, 34 auf. Gemäß der Darstellung in Figur 3 erstreckt sich die Gehäuseabdeckung 14 gemäß dem vorliegenden Ausführungsbeispiel von einem der Endbereich 34 etwa über zwei Drittel der Erstreckung des Gehäuses 12 bzw. des Zinkenträgers. In beiden Endbereichen 32, 34 ist in einem rückwärtigen Bereich eine weitere Verstärkung 36 vorgesehen.

## Patentansprüche

1. Zinkenträgergehäuse (12) eines Aufnehmers für landwirtschaftliches Erntegut geeignet zur Aufnahme von Zinken, **dadurch gekennzeichnet, dass** das Gehäuse (10) eine Gehäuseabdeckung (12) mit Aussparungen (28) aufweist, die geeignet sind, es zumindest Endabschnitten (26) der Zinken (16) zu erlauben, sich aus dem Gehäuse (10) nach außen zu erstrecken.

2. Zinkenträgergehäuse nach Anspruch 1, **dadurch gekennzeichnet, dass** die Gehäuseabdeckung (14) und das Gehäuse (12) einteilig oder mehrteilig ausgebildet sind.

3. Zinkenträgergehäuse nach Anspruch 1 oder 2, **dadurch gekennzeichnet, dass** die Gehäuseabdeckung (14) das Gehäuse (12) vollständig oder abschnittsweise überdeckt.

4. Zinkenträgergehäuse nach einem oder mehreren der vorherigen Ansprüche, **dadurch gekennzeichnet, dass** die Gehäuseabdeckung (14) mehrteilig ausgebildet ist.

5. Zinkenträgergehäuse nach einem oder mehreren der vorherigen Ansprüche, **dadurch gekennzeichnet, dass** das Gehäuse (12) im Wesentlichen und/oder annähernd U-förmig ausgebildet ist.

6. Zinkenträgergehäuse nach einem oder mehreren der vorherigen Ansprüche, **dadurch gekennzeichnet, dass** jeweils zwei Aussparungen (28) einen Steg (30) einschließen und/oder dass die Gehäuseabdeckung (14) leiterartig ausgebildet ist.

7. Zinkenträger (10) eines Aufnehmers für landwirtschaftliches Erntegut mit einem Zinkenträgergehäuse (10) gemäß einem oder mehreren der vorherigen Ansprüche und mit einer Mehrzahl von Zinken (16), welche direkt oder indirekt an dem Zinkenträgergehäuse (10) befestigt sind und vorzugsweise jeweils wenigstens einen Endabschnitt (26) aufweisen, der sich durch eine der Aussparungen (28) in der Gehäuseabdeckung (14) nach außen erstreckt.

8. Zinkenträger nach Anspruch 7, **dadurch gekennzeichnet, dass** die Zinken (16) einen spiralförmigen Abschnitt (20) aufweisen, der vorzugsweise zumindest im Wesentlichen im Inneren des Gehäuses (12) angeordnet ist, von dem sich der Endabschnitt (26) bzw. vorzugsweise zwei Endabschnitte (26) nach außen erstrecken.

9. Zinkenträger nach Anspruch 7 oder 8, **dadurch gekennzeichnet, dass** das Gehäuse (12) zumindest in einem oder beiden seiner Endbereichen (32, 34) eine rückwärtige Verstärkung (26) aufweist.

10. Aufnehmer für landwirtschaftliches Erntegut mit wenigstens einem Zinkenträger (10) gemäß einem oder mehreren der Ansprüche 7 bis 9.
